# EUROPEAN PATENT APPLICATION

(11) **EP 2 058 147 A1**
(43) Date of publication of application: **13.05.2009**
(21) Application number: 07793013.9
(22) Date of filing: 27.08.2007
(51) Int. Cl.: B60C 17/00, B60C 5/00, B60C 11/04

(54) **PNEUMATIC TIRE**

(30) Priority: 28.08.2006 JP 2006230883
(71) Applicant: Bridgestone Corporation, Tokyo 104-8340 (JP)
(72) Inventor: HAMADA, Yasuhiro, Kodaira-shi, Tokyo 187-8531 (JP)
(74) Representative: Whalley, Kevin
(86) International application number: PCT/JP2007/066538
(87) International publication number: WO 2008/026535

(57) **Abstract**

A pneumatic tire (1) including: a pair of bead portions (3) each including a bead core and a bead filler; a carcass layer (5) extending toroidally via a sidewall portion (SW); a tread portion (7) arranged outward of the carcass layer in a radial direction of a tire; and sidewall reinforcement layers (9) which are arranged inward of the carcass layer (5) in a tread width direction, are each formed of rubber having a crescent cross-section in the tread width direction, and reinforces the respective sidewall portions (SW), **characterized in that** an inside width direction groove (17) is arranged in an inside region (IN) of the tread portion (7), and a circumferential direction groove (23) and an outside width direction groove (25) are arranged in an outside region (OUT) of the tread portion (7).

## Description

### TECHNICAL FIELD

The present invention relates to a pneumatic tire, and particularly relates to a pneumatic tire including sidewall reinforcement layers which reinforce sidewall portions.

### BACKGROUND ART

Conventionally, many proposals have been made for pneumatic tires that are capable of running in a state where internal pressure is decreased, i.e., a punctured state (so-called run-flat running).

For example, a pneumatic tire including sidewall reinforcement layers which are each formed of rubber having a crescent cross-section in the tread width direction and which reinforce sidewall portions is disclosed (for example, see Patent Documents 1 and 2). The run-flat running is possible with the pneumatic tire since the sidewall reinforcement layers can support the load in the punctured state.

However, although a run-flat durability can be improved by the hardening or thickening of the sidewall reinforcement layers with the conventional pneumatic tire described above, hardening the sidewall reinforcement layers affects the ride comfort and thickening the sidewall reinforcement layers increase the tire weight and the rolling resistance.

With pneumatic tires of recent years, the sidewall portion closer to the center of a vehicle when the tire is mounted to the vehicle is deflected to a large extent due to a camber angle, and a failure tends to occur in the sidewall portion closer to the center of a vehicle when the tire is mounted to the vehicle. Therefore, it has been required to suppress the deflection in the sidewall portion.
Patent Document 1: Japanese Patent Application Publication No. Hei 10-138719 (pages 1 to 3 and Fig. 1)
Patent Document 2: Japanese Patent Application Publication No. Hei 8-34814 (pages 1 and 2 and Fig. 1)

### DISCLOSURE OF THE INVENTION

The present invention has been made to solve the problems described above, and an object of the present invention is to provide a pneumatic tire in which deflection of a sidewall portion closer to the center of a vehicle when the tire is mounted to a vehicle can be suppressed in a punctured state to improve the run-flat durability without hardening or thickening a sidewall reinforcement layers.

In order to achieve the object, a first aspect of the present invention provides a pneumatic tire including: a pair of bead portions each including a bead core and a bead filler; a carcass layer folded back around the bead core and extending toroidally via sidewall portions; a tread portion arranged outward of the carcass layer in a radial direction of the tire so as to contact a ground; and sidewall reinforcement layers which are arranged inward of the carcass layer in a tread width direction, are each formed of rubber having a crescent cross-section in the tread width direction, and reinforce the respective sidewall portions, in which an inside width direction groove which is a groove extending in the tread width direction is arranged in an inside region which is a region located closer to the center of a vehicle when the tire is mounted to a vehicle than a tire equator of the tread portion, and a circumferential direction groove extending approximately parallel to the tire equator and an outside width direction groove which is a groove extending in the tread width direction are arranged in an outside region which is a region located farther from the center of the vehicle when the tire is mounted to the vehicle than the tire equator of the tread portion.

Herein, being approximately parallel includes a range where the inclination angle of the groove with respect to the tire equator is 0 to 5 degrees.

According to the first aspect of the present invention described above, a deformation in the inside region of the tread portion can be suppressed by the inside width direction grooves being arranged in the inside region and the circumferential direction groove and the outside width direction grooves being arranged in the outside region, i.e., the circumferential direction groove not being arranged in the inside region. Therefore, deflection in the sidewall portion closer to the center of a vehicle when the tire is mounted to the vehicle can be suppressed in the punctured state to improve the run-flat durability. Accordingly, along with the circumferential direction groove not being arranged in the inside region, the run-flat durability can be improved without hardening or thickening the sidewall reinforcement layers.

A second aspect dependent on the first aspect of the present invention provides the pneumatic tire, in which no circumferential direction groove is arranged in the inside region.

According to the second aspect of the present invention, the deformation in the inside region of the tread portion can be suppressed. Therefore, deflection in the sidewall portion closer to the center of a vehicle when the tire is mounted to the vehicle can be suppressed in the punctured state to improve the run-flat durability.

A third aspect dependent on the first or second aspect of the present invention provides the pneumatic tire, in which an inside groove average width (W1) which is an average width of the inside width direction grooves is greater than an outside groove average width (W2) which is an average width of the outside width direction grooves.

According to the third aspect of the present invention, the rigidity of the tread portion in the inside region and the outside region can be maintained to be uniform by the inside groove average width (W1) being greater than the outside groove average width (W2). Thus, the driving stability in the punctured state or the non-punctured state can be improved.

A fourth aspect dependent on any one of the first to third aspects of the present invention provides the pneumatic tire, in which an inclined groove which is a groove obliquely extending from the circumferential direction groove is arranged in a portion of the outside region, the portion being located closer to the tire equator than the circumferential direction groove.

According to the fourth aspect of the present invention, rainwater or the like between the pneumatic tire and the ground can be drained on a wet ground or the like by the inclined grooves being arranged in a portion of the outside region located closer to the tire equator side than the circumferential direction groove. Thus, the drainage performance in the punctured state or the non-punctured state can be improved. Along with the improvement in drainage, the occurrence of a hydroplaning phenomenon of sliding on rainwater or the like on the ground can be reduced.

A fifth aspect dependent on any one of the first to fourth aspects of the present invention provides the pneumatic tire, in which a zigzag groove which is a groove including bend portions which are bent is arranged in a circumferential direction of the tire in the inside region.

According to the fifth aspect of the present invention, an edge effect in the inside region can be obtained sufficiently by the zigzag groove being arranged in the inside region. Thus, the driving stability in the punctured state or the non-punctured state can further be improved.

A sixth aspect dependent on any one of the first to fifth aspects of the present invention provides the pneumatic tire, in which an intersecting groove which is a groove extending and intersecting with an inside bend portion located on the tire equator side is arranged in the inside region.

According to the sixth aspect of the present invention, rainwater or the like between the pneumatic tire and the ground can be drained on the wet ground or the like by the intersecting grooves being arranged in the inside region. Thus, the drainage performance in the punctured state or the non-punctured state can further be improved.

A seventh aspect dependent on any one of the first to sixth aspects of the present invention provides the pneumatic tire, in which the inside width direction groove is continuous with an outside bend portion located, in the tread width direction, outward of an inside bend portion located on the tire equator side, and extends toward the outside in the tread width direction.

According to the seventh aspect of the present invention, rainwater or the like between the pneumatic tire and the ground can be drained on the wet ground or the like by the inside width direction grooves being continuous with the outside bend portion to extend toward the outside in the tread width direction. Thus, the drainage performance in the punctured state or the non-punctured state can further be improved.

As described above, according to the present invention, the pneumatic tire can be provided in which deflection in the sidewall portion closer to the center of a vehicle when the tire is mounted to the vehicle can be suppressed in the punctured state to improve the run-flat durability without hardening or thickening the sidewall reinforcement layers.

### BRIEF DESCRIPTION OF THE DRAWINGS

[Fig. 1] Fig. 1 is a sectional view of a pneumatic tire in a tread width direction according to this embodiment.
[Fig. 2] Fig. 2 is a development view (example) of the tread the pneumatic tire according to this embodiment.
[Fig. 3] Fig. 3 is a view showing (only an inside region in) a punctured state of a pneumatic tire according to a comparative example.
[Fig. 4] Fig. 4 is a view showing (only an inside region in) a punctured state of the pneumatic tire according to this embodiment.
[Fig. 5] Fig. 5 is a development view of a tread of the pneumatic tire according to the comparative example.
[Fig. 6] Fig. 6 is an illustrative view of deflection amounts and run-flat durabilities in the punctured states of the pneumatic tires according to the comparative example and this embodiment.

### BEST MODES FOR CARRYING OUT THE INVENTION

Hereinafter, one example of a pneumatic tire according to the present invention will be described with reference to the drawings. Note that, in the descriptions of the drawings below, the same or similar portions are denoted by the same or similar reference numerals. It should be noted that the drawing are schematic, and that ratios and the like of respective dimensions may differ from those in reality. Thus, the specific dimensions and the like should be determined in consideration of the descriptions below. Also, the relation of dimensions or ratios may differ amongst the drawings.

### (Structure of Pneumatic Tire)

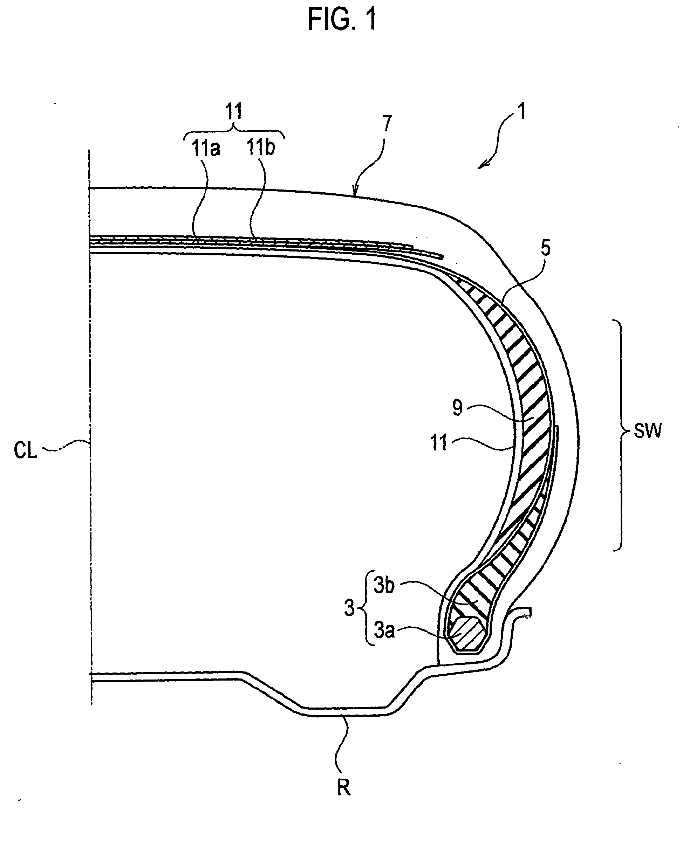

First, the structure of a pneumatic tire according to this embodiment will be described with reference to Fig. 1. Fig. 1 is a sectional view of the pneumatic tire in a tread width direction according to this embodiment.

As shown in Fig. 1, a pneumatic tire 1 includes a pair of a bead portion 3 each including a bead core 3a and a bead filler 3b. The pneumatic tire 1 also includes a carcass layer 5 which is folded back from the inside in the tread width direction to the outside in the tread width direction around the bead core 3a and which extends toroidally via a sidewall portion SW.

Outward of the carcass layer 5 in the radial direction of the tire, a tread portion 7 which contacts the ground is arranged. The details of the tread portion 7 will be described later.

Inward of the carcass layer 5 in the tread width direction, sidewall reinforcement layers 9 which are each formed of rubber having a crescent cross-section in the tread width direction and which reinforces the respective sidewall portions SW are arranged. Inward of the sidewall reinforcement layers 9 in the tread width direction, an inner liner 11 which is a highly hermetic rubber layer equivalent to a tube is provided.

Outward of the carcass layer 5 in the radial direction of the tire and the inside of the tread portion 7 in the radial direction of the tire, a belt layer 13 which reinforces the tread portion 7 is arranged. The belt layer 13 includes a first belt layer 13a arranged outward of the carcass layer 5 in the radial direction of the tire and a second belt layer 13b arranged outward of the first belt layer 13a in the radial direction of the tire.

### (Structure of Tread Portion)

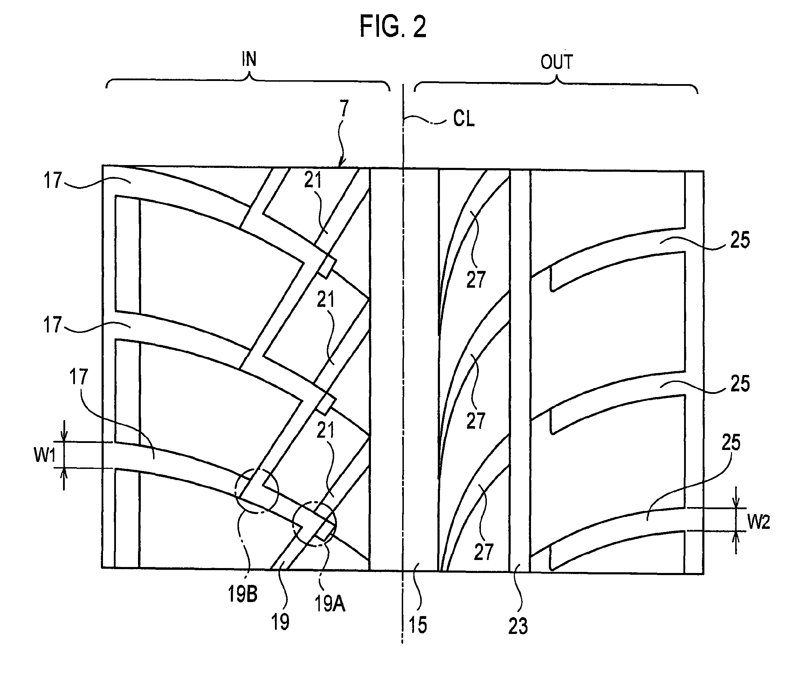

Next, the structure of the tread portion described above will be described with reference to Fig. 2. Fig. 2 is a development view of the tread of the pneumatic tire according to this embodiment.

As shown in Fig. 2, on a tire equator CL of the tread portion 7, a center groove 15 is arranged to extend approximately parallel to the tire equator CL.

In an inside region (IN) which is a region located closer to the center of a vehicle when a tire is mounted to the vehicle than the tire equator CL of the tread portion 7, inside width direction grooves 17 which are grooves extending in the tread width direction are arranged.

In the inside region (IN), a zigzag groove 19 which is a groove including bend portions 19A and 19B which are bent is arranged in the circumferential direction of the tire. Also, in the inside region (IN), intersecting grooves 21 which are grooves extending to intersect with the inside bend portion 19A located on the tire equator CL side are arranged.

Note that the inside width direction grooves 17 described above extend toward the outside in the tread width direction with respect to the center of the tire. In addition, the inside width direction grooves 17 are continuous with the outside bend portion 19B located, in the tread width direction, outward of the inside bend portion 19A located on the tire equator CL side.

In an outside region (OUT) which is a region located farther from the center of a vehicle when the tire is mounted to the vehicle than the tire equator CL of the tread portion 7, a circumferential direction groove 23 extending approximately parallel to the tire equator CL and outside width direction grooves 25 which are grooves extending in the tread width direction are arranged.

In a portion of the outside region (OUT), the portion being located closer to the tire equator CL than the circumferential direction groove 23, i.e., a portion between the center groove 15 and the circumferential direction groove 23, inclined grooves 27 which are grooves obliquely extending in the rotation direction of the tire from the circumferential direction groove 23 is arranged.

An inside groove average width (W1) which is an average width of the inside width direction grooves 17 is preferably greater than an outside groove average width (W2) which is an average width of the outside width direction grooves 25. Note that, when the inside groove average width (W1) is smaller than the outside groove average width (W2), the rigidity of the tread portion 7 in the inside region (IN) and the outside region (OUT) may not be maintained uniformly, and there are cases where the driving stability in a punctured state or a non-punctured state cannot be improved.

### (Advantageous Effects)

In the pneumatic tire 1 according to this embodiment described above, the inside width direction grooves 17 are arranged in the inside region (IN), and the circumferential direction groove 23 and the outside width direction grooves 25 are arranged in the outside region (OUT), i.e., the circumferential direction groove is not arranged in the inside region (IN). Accordingly, deflection in the sidewall portion SW closer to the center of a vehicle when the tire is mounted to the vehicle can be suppressed in the punctured state to improve the run-flat durability without hardening or thickening the sidewall reinforcement layers 9.

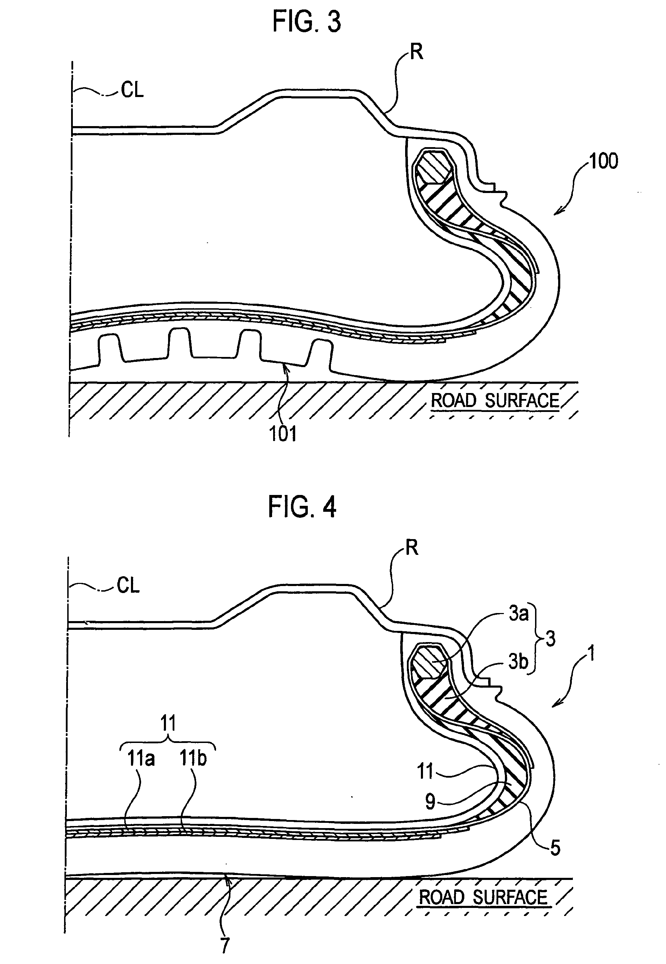

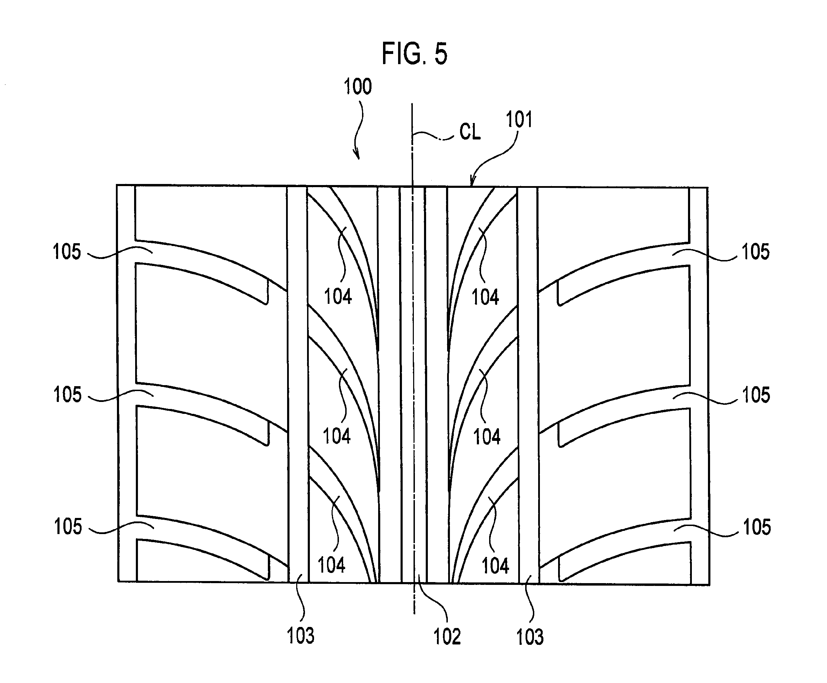

Specifically, as shown in Fig. 3, in the pneumatic tire (see Fig. 5) having a symmetrical tread pattern with respect to the tire equator CL, a deformation in the inside region of a tread portion 101 cannot be suppressed since a circumferential direction groove 103 is arranged in each of the inside region and the outside region. Therefore, deflection in the sidewall portion located closer to the center of a vehicle when the tire is mounted to the vehicle cannot be suppressed in the punctured state, and the run-flat durability cannot be improved.

On the other hand, as shown in Fig. 4, in the pneumatic tire 1 according to this embodiment, a deformation in the inside region (IN) of the tread portion 7 can be suppressed by the circumferential direction groove not being arranged in the inside region (IN). Therefore, deflection in the sidewall portion SW closer to the center of a vehicle when the tire is mounted to the vehicle can be suppressed in the punctured state to improve the run-flat durability.

With the pneumatic tire 1 according to this embodiment, the rigidity of the tread portion 7 in the inside region (IN) and the outside region (OUT) can be maintained to be uniform by the inside groove average width (W1) being greater than the outside groove average width (W2). Thus, the driving stability in the punctured state or the non-punctured state can be improved.

With the pneumatic tire 1 according to this embodiment, rainwater or the like between the pneumatic tire 1 and the ground can be drained on a wet ground or the like by the inclined grooves 27 being arranged in a portion of the outside region (OUT), the portion being located closer to the tire equator CL than the circumferential direction groove 23, i.e., a portion between the center groove 15 and the circumferential direction groove 23. Thus, the drainage performance in the punctured state or the non-punctured state can be improved. Along with the improvement in drainage, the occurrence of a hydroplaning phenomenon of sliding on rainwater or the like on the ground can be reduced.

With the pneumatic tire 1 according to this embodiment, an edge effect in the inside region (IN) can be obtained sufficiently by the zigzag groove 19 being arranged in the inside region (IN). Thus, the driving stability in the punctured state or the non-punctured state can further be improved.

With the pneumatic tire 1 according to this embodiment, rainwater or the like between the pneumatic tire 1 and the ground can be drained on the wet ground or the like by the intersecting grooves 21 being arranged in the inside region (IN). Thus, the drainage performance in the punctured state or the non-punctured state can further be improved.

Further, with the pneumatic tire 1 according to this embodiment, rainwater or the like between the pneumatic tire 1 and the ground can be drained on the wet ground or the like by the inside width direction grooves 17 being continuous with the outside bend portion 19B to extend toward the outside in the tread width direction. Thus, the drainage performance in the punctured state or the non-punctured state can further be improved.

### [Other Embodiments]

The content of the present invention has been disclosed by way of the embodiment of the present invention described above. However, the descriptions and drawings forming a part of the disclosure should not be construed to limit the present invention.

Specifically, although it has been described that the center groove 15 is arranged on the tire equator CL of the tread portion 7, it is not limited thereto. It is needless to say that the center groove 15 may not be arranged on the tire equator CL of the tread portion 7.

Various alternative embodiments, examples, and application techniques shall become clear to those skilled in the art from this disclosure. Thus, the technical range of the present invention is defined only by the claims according to the scope of claims appropriate from the descriptions above.

### Example

Next, in order to clarify the effect of the present invention, test results for pneumatic tires of a comparative example and an example will be described below. Note that sizes of the pneumatic tires are both 245/40R18.

First, the structures of the pneumatic tires of the comparative example and the example will be described with reference to the drawings. Note that the conditions of the pneumatic tires were the same except for the structures of the tread portions described below.

A pneumatic tire 100 according to the comparative example has a symmetrical tread pattern with respect to the tire equator CL, as shown in Fig. 5. Specifically, in the tread portion 101, a center groove 102 extending approximately parallel to the tire equator CL and circumferential direction grooves 103 extending approximately parallel to the center groove 102 are arranged. In a center portion of the tread portion 101, inclined grooves 104 which are grooves extending to be inclined in the rotation direction of the tire from the circumferential direction grooves 103 are arranged. Further, in a shoulder portion of the tread portion, width direction grooves 105 extending in the tread width direction are arranged.

The pneumatic tire according to the example has an asymmetrical tread pattern with respect to the tire equator CL, as shown in Fig. 2. Specifically, the center groove 15 is arranged on the tire equator CL of the tread portion 7. In the inside region (IN), the inside width direction grooves 17, the zigzag groove 19, and the intersecting grooves 21 are arranged. In the outside region (OUT), the circumferential direction groove 23, the outside width direction grooves 25, and the inclined grooves 27 are arranged. Note that the inside groove average width (W1) is set to be greater than the outside groove average width (W2).

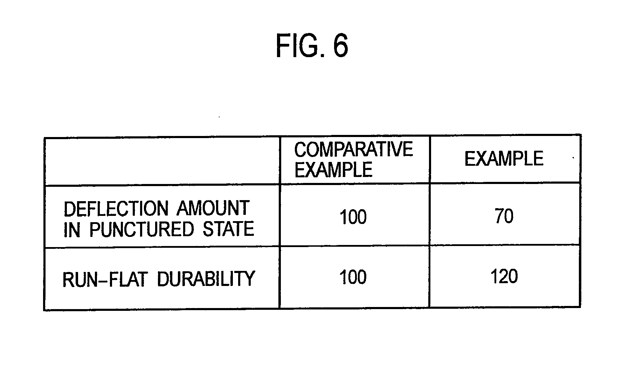

The deflection amounts and the run-flat durabilities of the pneumatic tires of the comparative example and the example in the punctured states will be described with reference to Fig. 6.

### <Deflection Amount in Punctured State>

Each pneumatic tire was mounted to a vehicle (of 4000 cc displacement), and the deflection amount in the tread portion and the sidewall portion of the pneumatic tire according to the example was evaluated in a relative value with an index of the deflection amount in the tread portion and the sidewall portion of the pneumatic tire of the comparative example being 100 under conditions of an 1800 kg load and a 0 Pa internal pressure (so-called punctured state). Note that a smaller index shows a smaller deflection amount in the punctured state.

As a result, it was found that the pneumatic tire according to the example had a smaller deflection amount in the tread portion and the sidewall portion in the punctured state compared to the pneumatic tire according to the comparative example.

### <Run-flat durability>

Each pneumatic tire was mounted to a vehicle (of 4000 cc displacement), and a drivable distance with the pneumatic tire according to the example was evaluated in a relative value with an index of the drivable distance with the pneumatic tire according to the comparative example being 100 by rolling the tire under conditions of an 1800 kg load and a 0 Pa internal pressure (so-called punctured state). Note that a greater index shows a longer drivable distance in the punctured state.

As a result, it was found that the pneumatic tire according to the example provides a longer drivable distance in the punctured state and a greater run-flat durability compared to the pneumatic tire according to the comparative example.

The present invention is not limited to what is described above and in the embodiment of the present invention, and can be carried out in other various embodiments with appropriate modifications.

Note that the disclosure of Japanese Patent Application No. 2006-230883 (filed on August 28, 2006) is incorporated herein by reference in its entirety.

## Claims

1. A pneumatic tire comprising:
a pair of bead portions each including a bead core and a bead filler;
a carcass layer folded back around the bead core and extending toroidally via sidewall portions;
a tread portion arranged outward of the carcass layer in a radial direction of the tire so as to contact a ground; and
sidewall reinforcement layers which are arranged inward of the carcass layer in a tread width direction, are each formed of rubber having a crescent cross-section in the tread width direction, and reinforce the respective sidewall portions, wherein
an inside width direction groove which is a groove extending in the tread width direction is arranged in an inside region which is a region located closer to the center of a vehicle when the tire is mounted to a vehicle than a tire equator of the tread portion, and
a circumferential direction groove extending approximately parallel to the tire equator and an outside width direction groove which is a groove extending in the tread width direction are arranged in an outside region which is a region located farther from the center of the vehicle when the tire is mounted to the vehicle than the tire equator of the tread portion.

2. The pneumatic tire according to claim 1, wherein no circumferential direction groove is arranged in the inside region.

3. The pneumatic tire according to claim 1, wherein an inside groove average width (W1) which is an average width of the inside width direction grooves is greater than an outside groove average width (W2) which is an average width of the outside width direction grooves.

4. The pneumatic tire according to claim 1, wherein an inclined groove which is a groove obliquely extending from the circumferential direction groove is arranged in a portion of the outside region, the portion being located closer to the tire equator than the circumferential direction groove.

5. The pneumatic tire according to claim 1, wherein a zigzag groove which is a groove including a plurality of bend portions which are bent is arranged in a circumferential direction of the tire in the inside region.

6. The pneumatic tire according to claim 5, wherein an intersecting groove which is a groove extending and intersecting with an inside bend portion located on the tire equator side is arranged in the inside region.

7. The pneumatic tire according to claim 5, wherein the inside width direction groove is continuous with an outside bend portion located, in the tread width direction, outward of an inside bend portion located on the tire equator side, and extends toward the outside in the tread width direction.

8. The pneumatic tire according to claim 6, wherein the inside width direction groove is continuous with an outside bend portion located, in the tread width direction, outward of the inside bend portion located on the tire equator side, and extends toward the outside in the tread width direction.
